# EUROPEAN PATENT SPECIFICATION

(11) **EP 1 591 308 B1**
(45) Date of publication and mention of the grant of the patent: **30.05.2007**
(21) Application number: 05008400.3
(22) Date of filing: 18.04.2005
(51) Int. Cl.: B60N 2/427, B60R 21/01, B60R 22/195

(54) **Occupant protection device for vehicle**
Insassenschutzeinrichtung
Dispositif de protection de passager

(30) Priority: 26.04.2004 JP 2004130143
(43) Date of publication of application: 02.11.2005
(73) Proprietor: AISIN SEIKI KABUSHIKI KAISHA, Kariya-shi, Aichi-ken 448-8650 (JP)
(72) Inventor: Hirota, Koichi c/o Aisin Seiki Kabushiki Kaisha, Kariya-shi Aichi-ken, 448-8650 (JP)
(74) Representative: Pautex Schneider, Nicole Véronique

(56) References cited:
- DE-A1- 19 961 799
- DE-C1- 4 323 543
- US-A1- 2002 188 393

## Description

This invention relates to an occupant protection device for a vehicle having a collision forecasting function such as a radar, wherein, when a collision is forecasted, actuations of a seat and a seat back are stopped or started so as to enhance the level of a protecting function for the occupant at a timing when an occupant can be appropriately protected by means of a safety device such as a seat belt.

### BACKGROUND

US 2002/0188393A discloses an occupant protection device for a vehicle comprising:
a collision forecast means for forecasting a collision;
a seat actuating means for moving a seat in a longitudinal direction of the vehicle so as to be in a predetermined target range and for tilting a seat back so as to be in the predetermined target range, and these actuations being operated as preparations for a collision;
a control means for controlling an actuation of the seat actuating means, wherein the control means stops the actuation of the seat actuating means at a predetermined time period before an anticipated collision time, the anticipated collision time being calculated on a basis of output signal from the collision forecast means.
Said US'393 also discloses an occupant protection device comprising
a belt actuating means for enhancing a tension of a seat belt as another preparation for the collision;
wherein the control means stops the actuation of the seat actuating means before the belt actuating means starts its actuation.

A known occupant protection device for a vehicle is disclosed in JP H11-334437A. The known occupant protection device actuates a pretensioner of a seat belt when a vehicle collision has been forecasted and enhances a tension of the seat belt so as to constrain an occupant to a vehicle seat as a result the occupant can be protected. However, when the seat back has been excessively inclined, even if the tension of the seat belt is enhanced, an appropriate protection effect cannot be obtained due to the position of the seat back. Thus, in order to protect the occupant appropriately, an angle of the seat back is detected at a time when a forecast of a collision is made, and if the angle of the seat back is out of a predetermined range, the seat back is raised so as to be in the predetermined range of angle.

However, it may take a long time to raise the seat back so as to be in the predetermined range of angle depending on the angle of the seat back at a time when a forecast of a collision is made. In fact, depending on a case, a time period, from a time when a collision is forecasted, to a time when the collision actually occurs, may be short, and in such a case, the seat back may be actuated at the very moment when the collision occurs, and this may have an inappropriate effect on the occupant protection. Further, if the seat back is

actuated after the actual collision, the occupant who has already been constrained by means of the locked seat belt may be restricted more than requires by the actuation of the seat back. Further, if the seat belt has not been locked, the occupant may have an uncomfortable feeling if he or she is constrained more than requires by the actuation of the seat back. Furthermore, the occupant is also constrained to the seat by means of the seat belt being retracted in order to enhance the tension thereof at a time when a forecast of a collision is made, and in this circumstance, the seat back is moved at the same time as the retracting of the seat belt, and thus, the occupant is further constrained to the seat more than requires, as a result, the occupant may has an uncomfortable feeling.

A need thus exists to provide an occupant protection device for a vehicle, by which, when a seat and a seat back are moved so as to be in a predetermined target range as preparations for a collision, when a time period, from a time when a collision is forecasted, to a time when the collision actually occurs, is short, the seat and the seat back can be stopped even when they are not positioned within the target range, as a result the unnecessary actuation of the seat and the seat back on the actual collision and after the collision can be stopped in order to enhance the protecting effect of the occupant, and further, the occupant can be prevented from being constrained to the seat more than requires. The present invention has been made in view of the above circumstances and provides an occupant protection device for a vehicle.

### SUMMARY OF THE INVENTION

The invention relates to an occupant protection device as defined by the independent claims.

According to an aspect of the present invention, an occupant protection device for a vehicle comprises a collision forecast means (16) for forecasting a collision, a seat actuating means (12) for moving a seat (1) in a longitudinal direction of the vehicle so as to be in a predetermined target range and for tilting a seat back (3) so as to be in the predetermined target range, and these actuations being operated as preparations for a collision, a control means (27) for controlling an actuation of the seat actuating means (12), wherein the control means (27) stops the actuation of the seat actuating means (12) when the seat and the seat back are not positioned within a predetermined targetforget range at a predetermined time period before an anticipated collision time at a predetermined time period before an anticipated collision time, the anticipated collision time being calculated on a basis of output signal from the collision forecast means (16).

Thus, even when the seat and the seat back are not positioned within the predetermined target range as a preparation for the collision, when a time period, from a time when the collision is forecasted, to a time when the collision actually occurs, is short, the seat and the seat back can be stopped even when they are not positioned within the target range, as a result the unnecessary actuations of the seat and the seat back on the collision and after the collision can be stopped in order to enhance the protecting effect of the occupant, and the occupant can be prevented from being constrained to the seat more than requires.

According to another aspect of the present invention, an occupant protection device for a vehicle comprises a collision forecast means (16) for forecasting a collision, a seat actuating means (12) for moving a seat (1) in a longitudinal direction of the vehicle so as to be in a predetermined target range and for tilting a seat back (3) so as to be in the predetermined target range, and these actuations being operated as preparations for a collision, a belt actuating means (13) for enhancing a tension of a seat belt (19) as another preparation for the collision, a control means (27) for controlling actuations of the seat actuating means (12) and the belt actuating means (13), wherein the control means (27) stops the actuation of the seat actuating means (12) when the seat and the seat back are not positioned within a predetermined targetforget range at a predetermined time period before an anticipated collision time before the belt actuating means (13) starts its actuation.

Thus, at a time when a forecast of a collision is made, the actuations of the seat and the seat back so as to be moved in the predetermined target range, and the actuation of retracting the seat belt so as to enhance the tension thereof, are not executed at the same time, as a result, the occupant is not constrained to the seat more than requires, further, the occupant may not have an uncomfortable feeling.

### BRIEF DESCRIPTION OF THE DRAWINGS

The foregoing and additional features and characteristics of the present invention will become more apparent from the following detailed description considered with reference to the accompanying drawings, wherein:
Fig.1 illustrate a seat of the occupant protection device for a vehicle according to a embodiment;
Fig.2 illustrates a control block diagram of the occupant protection device for a vehicle according to the embodiment;
Fig.3 illustrates a condition where the seat is positioned in an inappropriate position for occupant protection according to the embodiment;
Fig.4 illustrates an explanation view of actuations of a seat actuating means and a belt actuating means by means of a collision forecast means after a forecast of a collision is made, when there is enough time from a time when a forecast of a collision is made to an anticipated collision time;
Fig. 5 illustrates an explanation view of actuations of the seat actuating means and the belt actuating means by means of the collision forecast means after a forecast of a collision is made, when there is a short time from a time when a forecast of a collision is made to an anticipated collision time;
Fig.6 illustrates an explanation view of actuations of the seat actuating means and the belt actuating means by means of the collision forecast means after a forecast of a collision is made, when there is a short time from a time when a forecast of a collision is made to a time when the belt actuating means stars its actuation, and
Fig.7 illustrates an explanation view of actuations of the seat actuating means and the belt actuating means by means of the collision forecast means after a forecast of a collision is made, when an actual collision occurs before the actuation of the seat actuating means is stopped.

### DETAILED DESCRIPTION

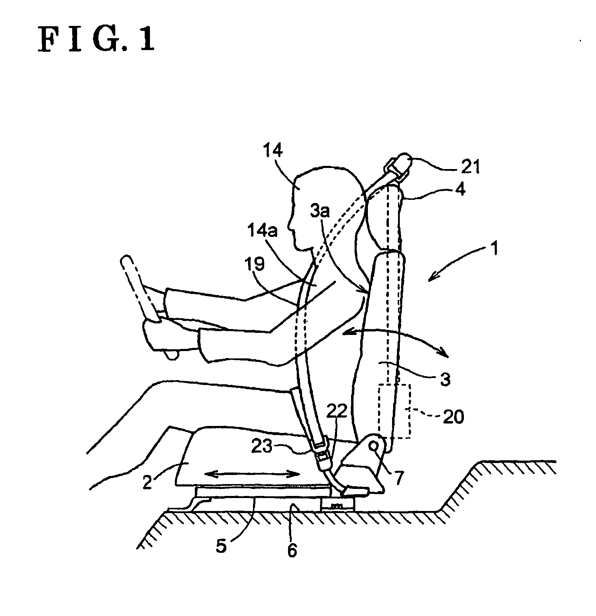

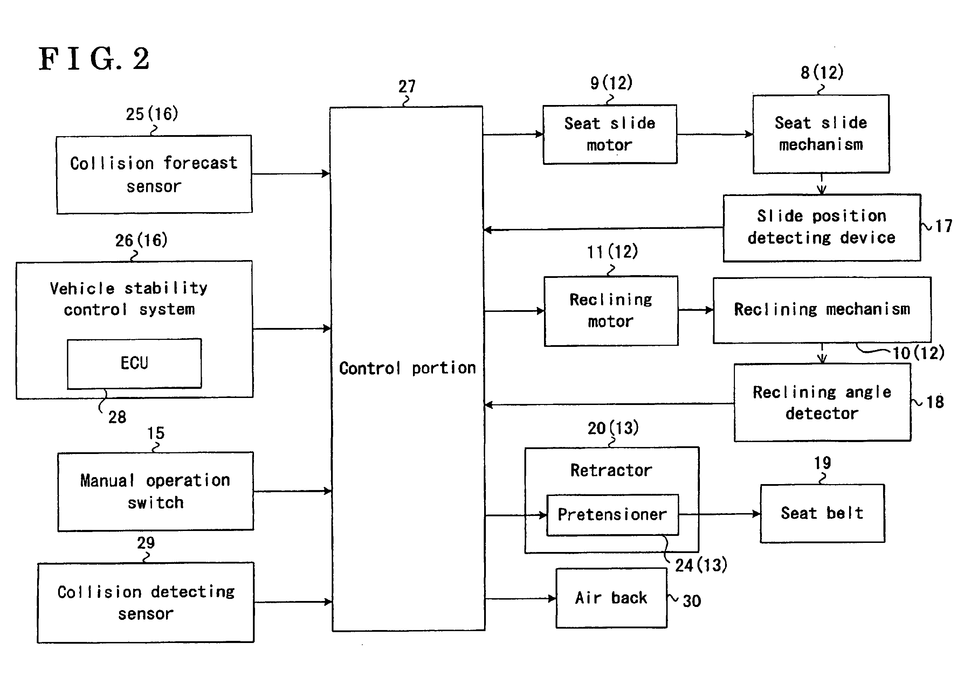

An embodiment of an occupant protection device for a vehicle, which is applied to a vehicle seat 1, according to the present invention will be explained in accordance with drawings attached hereto. Fig.1 illustrates the seat 1 to which the occupant protection device according to this embodiment is applied. Fig.2 illustrates a control block diagram of the occupant protection device for a vehicle.

As shown in Fig.1, the seat 1 includes a seat cushion 2, a seat back 3 and a headrest 4. The seat cushion 2 is mounted on a floor 6 of the vehicle by means of a slide rail 5 so as to slide in a longitudinal direction of the vehicle. Further, the seat back 3 is mounted on the seat cushion 2 by means of a predetermined fulcrum 7 so as to rotate relative to the fulcrum 7, and thus the angle of the seat back can be changed relative to the seat cushion 2. As shown in Fig.2, the seat cushion 2 slides in a longitudinal direction of the vehicle by means of a seat slide mechanism 8 and the seat slide motor 9 actuating the seat slide mechanism 8, and thus, the entire seat 1 can slide in a longitudinal direction of the vehicle. The seat back 3 is tilted by means of a reclining mechanism 10 and a reclining motor 11 actuating the reclining mechanism 10. In the embodiment, a seat actuating means 12 is comprised of the seat slide mechanism 8, the seat slide motor 9, the reclining mechanism 10 and the reclining motor 11. The actuation of the seat 1 sliding in a longitudinal direction of the vehicle and the actuation of the seat back 3 tilting in an particular angle are executed by means of a manual operation switch 15 operated by an occupant 14, or are executed as preparations for a collision on the basis of output signals from a collision forecast means 16, which will be explained later.

As shown in Fig.2, the seat slide mechanism 8 includes a slide position-detecting device 17 for detecting the position of the seat 1, which slides in a longitudinal direction of the vehicle. A linear potentiometer, a linear encoder or the like can be used as the slide position-detecting device 17. Further, the reclining mechanism 10 includes a reclining angle detector 18 for detecting the angle of the seat back 3. An angle measuring device such as a potentiometer a rotary encoder can be used as the reclining angle detector 18.

Further, the seat 1 includes a three-point seat belt 19 for constraining an occupant 14 in a seating state. In this embodiment shown in Fig.1, the seat belt 19 includes a retractor 20 retracting the seat belt 19, a shoulder belt anchor 21, a buckle 22, a tongue 23, and a fixing portion (not shown). Specifically, the shoulder belt anchor 21 is fixed to the vehicle body at an upper and rear-position of the seat back 3 being upright, in this embodiment the shoulder belt anchor 21 is fixed to a B pillar, and through which the seat belt 19 penetrates. By use of the buckle 22 and the tongue 23, the seat belt 19 can be fastened. The retractor 20 includes a pretensioner 24 (shown in Fig.2) enhancing the tension of the seat belt 19, at a time when a forecast of a collision is made on the basis of output signals from the collision forecast means 16, so as to increase the level of the constrain of the occupant 14, or for enhancing or reducing the tension of the seat belt 19 so as to draw an attention of the occupant 14. Specifically, the pretensioner 24 includes a torque limiter for maintaining the tension of the seat belt 19 at a constant level after the tension is enhanced. At a time when a forecast of a collision is made, after the tension of the seat belt 19 is enhanced until the torque limiter is actuated, the pretensioner 24 maintains the tension of the seat belt 19 for constraining the occupant 14 so as to be protected. In this embodiment, the pretensioner 24 of the retractor 20 corresponds to a belt actuating means 13.

The vehicle to which the occupant protection device is applied according to the embodiment further includes a collision forecast sensor 25 and a vehicle stability control system 26. The collision forecast sensor 25 uses, for example a millimeter wave radar or an image recognition device for detecting an existence of an obstacle around the vehicle. The collision forecast sensor 25 outputs signals into a control portion 27. in the control portion 27, on the basis of the output signals from the collision forecast sensor 25, a distance between the vehicle and the obstacle and a relative speed or the like are calculated, at the same time, it is detected whether or not the vehicle will collide with the obstacle. On the other hand, the vehicle stability control system 26 detects side slips of front wheels or rear wheels by means of, for example a sensor, and then that secures safety of the vehicle by controlling each of brakes of the wheels or controlling engine output. When the vehicle stability control system 26 is actuated, it can be determined that the vehicle may come into collision with the obstacle, and thus signals are output from the ECU (Electronic Control Unit) 28 of the vehicle stability control system 26 to the control portion 27 in accordance with a operating state of the vehicle stability control system 26. Further, in the control portion 27, on the basis of the output signals from the ECU 28 of the vehicle stability control system 26, it is determined that the vehicle may come into collision with the obstacle. Thus, in this embodiment, the collision forecast sensor 25 and the vehicle stability control system 26 serve as the collision forecast means 16 for forecasting a collision. The vehicle further includes a collision detecting sensor 29 for detecting a fact that the vehicle has actually collided with the obstacle. The collision detecting sensor 29 is comprised of a sensor for detecting collision impact, and the collision detecting sensor 29 is also used for controlling an actuation of the airbag 30.

Then, the control portion 27 determines whether or not the vehicle collides with the obstacle, on the basis of, either one of, or both of, the output signals from the collision forecast sensor 25 and the output signals from the vehicle stability control system 26. When the control portion 27 determines that a collision can not be avoided with a predetermined probability or above, the control portion 27 makes a forecast of a collision. Further, at this point, the control portion 27 calculates an anticipated collision time, on the basis of, either one of, or both of, the output signals from the collision forecast sensor 25 and the output signals from the vehicle stability control system 26. The anticipated collision time is calculated on the basis of information such as a distance between the vehicle and the obstacle, and a relative speed or the like, which are calculated on the basis of the output signals from the collision forecast sensor 25. As mentioned above, when the control portion 27 makes a forecast of a collision, the seat slide motor 9 and the reclining motor 11, which comprises the seat actuating means 12, are actuated, as a preparation for a collision, for sliding the seat so as to be in a predetermined target range and moving the seat back so as to be in a predetermined target range. And further, at a predetermined timing , as a preparation for a collision, the pretensioner 24, which comprises the belt actuating means 13, is actuated so as to increase the tension of the seat belt 19. Then, in accordance with a predetermined condition, the actuation of the seat actuating means 12 is stopped. A control means for controlling the actuation of the seat actuating means 12 and the belt actuating means 13 will be explained below. In this embodiment, the control portion 27 serves as the control means.

It is preferable that the predetermined target range of the position of the seat in a longitudinal direction of the vehicle and the predetermined target range of the angle of the seat back 2 are set within the range in which the occupant 14 can be preferably constrained so as to be protected by use of the seat belt 19 and the air back 30.

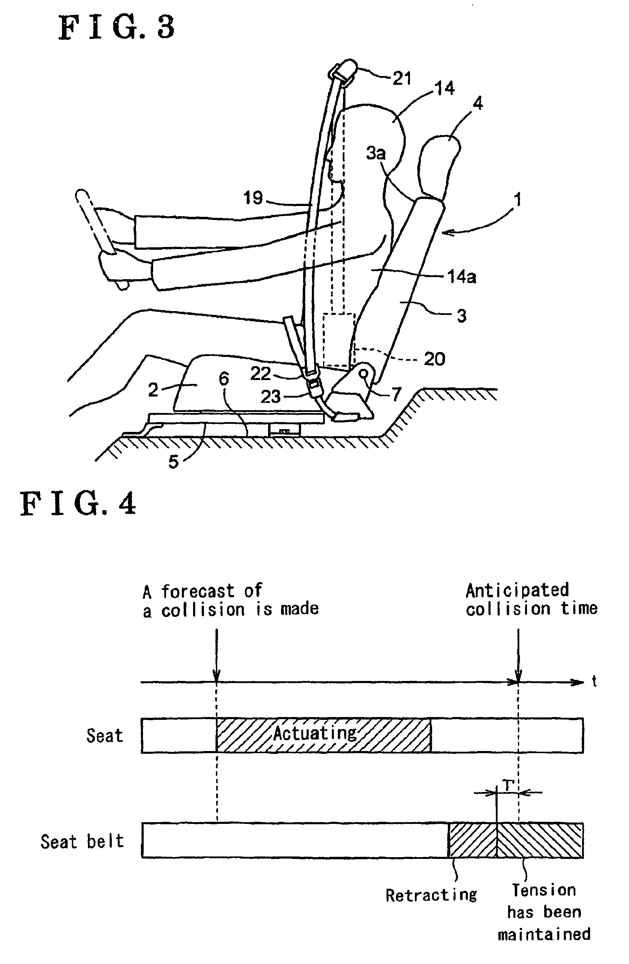

For example, when the seat 1 and the seat back 3 are positioned in a manner that a shoulder portion 3a of the seat back 3 is positioned forwards relative to a shoulder belt anchor 21, e.g. the seat is positioned at from a predetermined range (± 10cm) from center of the slide rail 5 and the seat back is reclined backward at a predetermined range (20-25degree) from a vertical direction for the slide rail 5, the occupant 14 is preferably constrained by use of the seat belt so as to be protected. Specifically, as shown in Fig.3, when the shoulder portion 3 of the seat back 3 is positioned considerably rear relative to the shoulder belt anchor 21, a space may be provided between the seat belt 19 and an upper body 14a, from shoulder to chest, of the occupant 14. In such circumstance, even when the tension of the seat belt 19 is enhanced at a time when a forecast of a collision is made, it becomes difficult to tightly constrain the occupant 14 to the seat back 3 by use of the seat belt 19, as a result the occupant may not be protected appropriately on a collision.

Next, the controlling means by use of such the control portion 27 for starting and stopping actuations of the seat actuating means 12 and the belt actuating means 13 will be explained.From Fig.4 to Fig.7 illustrate explanation views of examples of the actuations of the seat actuating means 12 and the belt actuating means 13 after each forecast of a collision is made by means of the collision forecast means 16. Fig.4 illustrates an example of a control when a time period between a time when the control portion 27 make a forecast of a collision and a anticipated collision time is relatively long, specifically the time period is equal to longer than a time period required to move the seat (the seat 1 or the seat back 3) by means of the actuation of the seat actuating means 12 so as to be in the predetermined target range.

At this point, the control portion 27 starts the actuation of the seat actuating means 12 at a time when a forecast of a collision is made on the basis of the output signals from the collision forecast means 16, and the actuation of the seat actuating means 12 is stopped when the seat 1 and the seat back 3 (a position of the seat 1 in longitudinal direction of the vehicle and an angle of the seat back 3) reach the predetermined target range. Further, after the forecast of a collision has been made, the control portion 27 actuates the belt actuating means 13 in order to start retracting the seat belt 19 at a point in advance of the anticipated collision time, a time period required for retracting the seat belt 19 so as to constrain the occupant 14 to the seat 1, to which a predetermined time period T' has been added. As mentioned above, after the tension of the seat belt becomes at a constant tension by means of the actuation of the torque limiter, the tension of the seat belt has been maintained at the constant tension. In consideration of a difference between the anticipated collision time and the actual collision time, the predetermined time period T' is set at a value so as to finish retracting the seat belt 19 before the actual collision time with probability and to maintain the tension of the seat belt 19 at the constant tension.

In Fig.4, the seat 1 reaches the predetermined target range before the belt actuating means 13 is actuated, however, the seat 1 may not reach the predetermined target range before the belt actuating means 13 is actuated. When the seat 1 does not reach the predetermined target range before the belt actuating means 13 is actuated, the seat actuating means 12 could be controlled so as to maintain its actuation even if the belt actuating means 13 has been actuated.

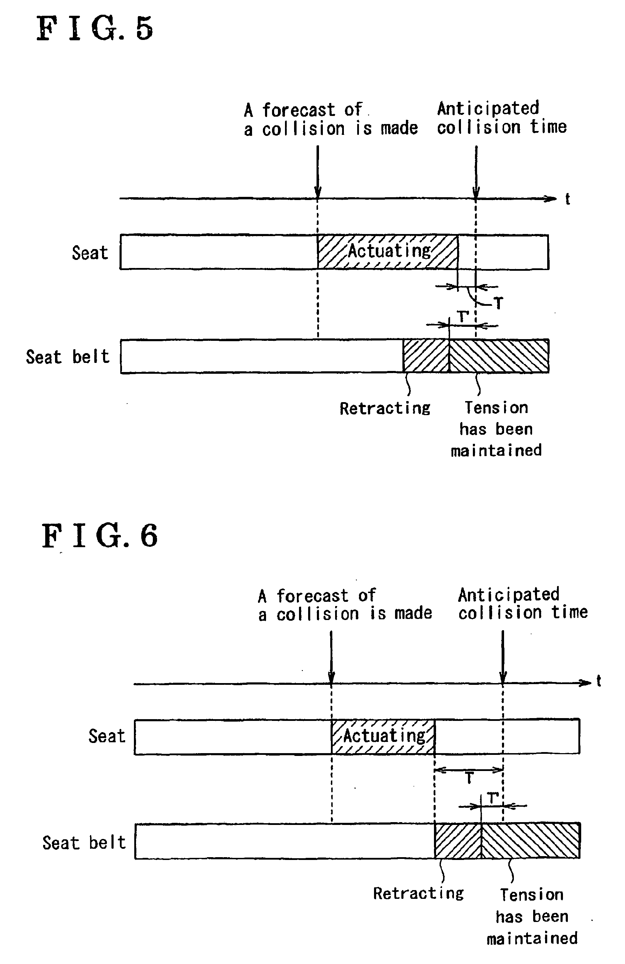

Further, as shown in Fig.6 that will be explained in detail later, even when the seat does not reach the predetermined target range, the actuation of the seat actuating means 12 can be stopped at a time when the actuation of the belt actuating means 13 starts, or before the actuation of the belt actuating means 13 starts.

Fig.5 illustrates an example of a control when a time period, between a time when the control portion 27 make a forecast of a collision and a anticipated collision time is relatively short, specifically the time period is shorter than a time period required to move the seat (the seat 1 or the seat back 3) by means of the actuation of the seat actuating means 12 so as to be in the predetermined target range. At this point, the control portion 27 starts the actuation of the seat actuating means 12 at a time when a forecast of a collision is made on the basis of the output signals from the collision forecast means 16, and the actuation of the seat actuating means 12 is stopped at a point in advance of the anticipated collision time, a predetermined time period T. The anticipated collision time is calculated on a basis of an output from the collision forecast means 16 as mentioned above. In this example, in consideration of a difference between the anticipated collision time and the actual collision time, the predetermined time period T is set at a value in order to stop the actuation of the seat actuating means 12 before the actual collision time with probability. Thus, the more the anticipated collision time, calculated by the control portion 27 on the basis of the output signals from the collision forecast means 16, becomes accurate, the more the predetermined time period T can be set at a short time period. In this embodiment, because the anticipated collision time is a fixed-value calculated by the control portion 27 when a forecast of a collision is made, it is preferable that the predetermined time period T is set at a fixed-value. Further, after the forecast of a collision has been made, the control portion 27 actuates the belt actuating means 13 in order to start retracting the seat belt 19 at a point in advance of the anticipated collision time, a time period required for retracting the seat belt 19 so as to constrain the occupant 14 to the seat 1, to which a predetermined time period T' has been added. As mentioned above, after the tension of the seat belt becomes at a constant tension by means of the actuation of the torque limiter, the tension of the seat belt has been maintained at the constant tension. In the same manner as the example shown in Fig.4, in consideration of a difference between the anticipated collision time and the actual collision time, the predetermined time period T' is set at a value so as to finish retracting the seat belt 19 before the actual collision time with probability and to maintain the tension of the seat belt 19 at the constant tension.

Actually, because the output signals from the collision forecast means 16 are input into the control portion 27 with a predetermined interval or continuously, the anticipated collision time can be updated depending on such the output signals momentarily output from the collision forecast means 16, as a result an accurate anticipated collision time can be calculated. In this circumstance, on the basis of the updated anticipated collision time, the seat actuating means 12 and the belt actuating means 13 are actuated. Specifically, the point when the seat actuating means 12 start to be actuated when a forecast of a collision is made is the same as the above point, however, the control portion 27 stops the actuation of the seat actuating means 12 on the basis of the updated anticipated collision time. The time when the seat actuating means 12 is stopped is set at a time in advance of the updated anticipated collision time, the predetermined time period T. Further, the control portion 27 monitors the anticipated collision time that has been momentarily updated. Further, after the forecast of a collision has been made, the control portion 27 actuates the belt actuating means 13 in order to start retracting the seat belt 19 at a point in advance of the anticipated collision time, a time period required for retracting the seat belt 19 so as to constrain the occupant 14 to the seat 1, to which a predetermined time period T' has been added. As mentioned above, after the tension of the seat belt becomes at a constant tension by means of the actuation of the torque limiter, the tension of the seat belt has been maintained at the constant tension. At this point, the predetermined time periods T and T' can be changed depending on the accuracy of the anticipated collision time that has been momentarily updated.

The predetermined time period T used for stopping the actuation of the seat actuating means 12 is not limited to a value, which is set in consideration of the difference between the anticipated collision time and the actual collision time. For example the predetermined time period T may be set at "0", or in the same manner as an example shown in Fig.6 that will be explained later, the predetermined time period T can be set on the basis of the point of time when the actuation of the belt actuating means 13 is started.

Fig.6 illustrates an example of a control when a time period, between a time when the control portion 27 make a forecast of a collision and the point of time when the actuation of the belt actuating means 13 starts, is relatively short, specifically the time period is shorter than a time period required to move the seat (the seat 1 or the seat back 3) by means of the actuation of the seat actuating means 12 so as to be in the predetermined target range. In this example, after the forecast of a collision has been made, the control portion 27 actuates the belt actuating means 13 in order to start retracting the seat belt 19 at a point in advance of the anticipated collision time, a time period required for retracting the seat belt 19 so as to constrain the occupant 14 to the seat 1, to which a predetermined time period T' has been added. As mentioned above, after the tension of the seat belt becomes at a constant tension by means of the actuation of the torque limiter, the tension of the seat belt has been maintained at the constant tension. Then, the control portion 27 starts the actuation of the seat actuating means 12 when a forecast of a collision is made on the basis of the output signals from the collision forecast means 16. The actuation of the seat actuating means 12 is stopped before the actuation of the belt actuating means 13 starts (in this example, at the same time as the actuation of the belt actuating means 13 starts). In this case, the predetermined time period T used for stopping the actuation of the seat actuating means 12 is set on the basis of a time when the actuation of the belt actuating means 13 starts. Specifically, the predetermined time period T is set at equal to or more than a differential time between the anticipated collision time and the time when the actuation of the belt actuating means 13 starts. In this example, the predetermined time period T is set at equal to the differential time between the anticipated collision time and the time when the actuation of the belt actuating means 13 starts.

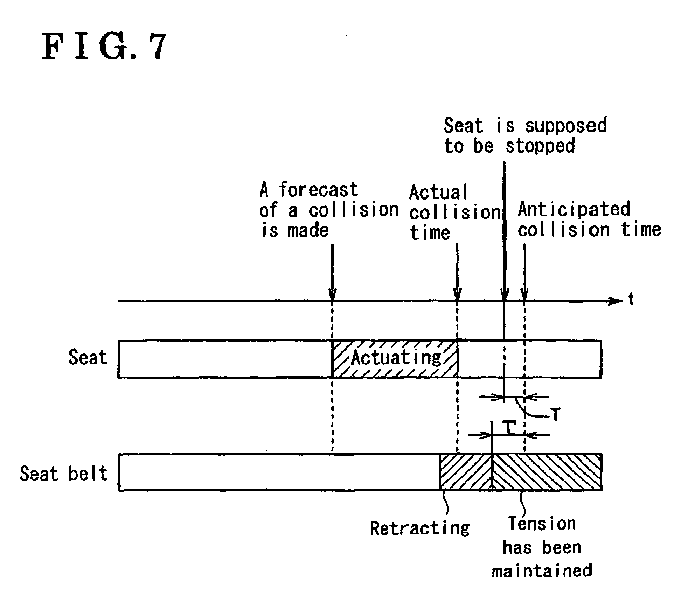

Fig.7 illustrates an example when the actual collision occurs before the actuation of the seat actuating means 12 is stopped. In this case, in the same manner as the above examples, the control portion 27 starts the actuation of the seat actuating means 12 at a time when a forecast of a collision is made on the basis of the output signals from the collision forecast means 16. However, the actual collision has been occurred the predetermined time period T before the anticipated collision time, at which the seat actuating means 12 is supposed to be stopped, the actuation of the seat actuating means 12 is stopped on the actual collision time. In this example, after the forecast of a collision has been made, the control portion 27 actuates the belt actuating means 13 in order to start retracting the seat belt 19 at a point in advance of the anticipated collision time, a time period required for retracting the seat belt 19 so as to constrain the occupant 14 to the seat 1, to which a predetermined time period T' has been added. As mentioned above, after the tension of the seat belt becomes at a constant tension by means of the actuation of the torque limiter, the tension of the seat belt has been maintained at the constant tension. In this example ,the actual collision occurs while the seat belt 19 has been retracted, however, the actuation of the belt actuating means 13 has been maintained in order to prevent the occupant 14 from being thrown out of the vehicle compartment after the actual collision.
(1) In the embodiment of the present invention, after a forecast of a collision is made, the tension of the seat belt 19 has been enhanced at a predetermined timing. This invention may be applied to another usages. For example, this invention can be used for controlling an operation of a seat not having a seat belt, or for controlling an actuation of the seat 1 when the seat belt 19 has not been fasten or when the seat belt 19 has malfunctioned. In such cases, it is preferable that the predetermined target range of the seat 1 and the seat back 3 are set in accordance with another safety devices such as the air back 30.
(2) In the examples shown in from Fig.4 to Fig.7, after the forecast of a collision has been made, the control portion 27 actuates the belt actuating means 13 in order to start retracting the seat belt 19 at a point in advance of the anticipated collision time, a time period required for retracting the seat belt 19 so as to constrain the occupant 14 to the seat 1, to which a predetermined time period T' has been added. In this circumstance, the pretensioner 24 that comprises the belt actuating means 13 may be additionally actuated in order to enhance or reduce the tension of the seat belt 19 so as to draw the occupant's attention.
(3) In the embodiment, at a time when a forecast of a collision is made, the position of the seat 1 is changed in a longitudinal direction of the vehicle, and the angle of the seat back 3 is changed. In addition to these preparations, a front portion of the seat cushion 2 can also be tilted up in order to prevent so called "submarine phenomenon" in which the occupant 14 gets under the seat belt 19 so as to move forward. Further, the headrest can be tilted up in order to protect cervical part of the occupant 14 in case the collision occurs at the rear portion of the vehicle.

This invention relates to an occupant protection device for a vehicle having a collision forecasting function such as a radar, wherein, when a collision is forecasted, actuations of a seat and a seat back are stopped or started so as to enhance the level of a protecting function for the occupant at a timing when an occupant can be appropriately protected by means of a safety device such as a seat belt. This invention can be applied various types of an occupant protection device for vehicles such as an automobile.

Thus, even when the seat and the seat back are not positioned within a predetermined target range as a preparation for a collision, when a time period, from a time when a collision is forecasted, to a time when the collision actually occurs, is short, the seat and the seat back can be stopped even when they are not positioned within the target range, as a result the unnecessary actuations of the seat and the seat back on the collision and after the collision can be stopped in order to enhance the protecting effect of the occupant, and the occupant can be prevented from being constrained to the seat more than requires.

In addition, the actuation of the seat actuating means can be stopped on a basis of the renewed accurate anticipated collision time.

Further, at a time when a forecast of a collision is made, the actuations of the seat and the seat back so as to be moved in the predetermined target range and the actuation of retracting the seat belt so as to enhance the tension thereof are not executed at the same time, as a result, the occupant is not constrained to the seat more than requires, further, the occupant may not have an uncomfortable feeling.

Furthermore, the seat and the seat back can be actuated after the collision occurs so as to prevent the occupant from being constrained by means of the seat belt that is locked due to a collision impact, at the same time, when the seat belt has not been locked, it is prevented that the occupant is restricted more than requires by an unnecessary actuation of the seat back, which may make the occupant uncomfortable.

In addition, it is preferable that the predetermined target range of the seat and the seat back is set at a range within which the protection effect of the occupant by means of a safety device can be appropriately enhanced. Specifically, it is preferable that the predetermined target range is set at a range in which an upper portion of the seat back is positioned forwards relative to a shoulder belt anchor.

## Claims

1. An occupant protection device for a vehicle comprising:
a collision forecast means (16) for forecasting a collision;
a seat actuating means (12) for moving a seat (1) in a longitudinal direction of the vehicle so as to be in a predetermined target range and for tilting a seat back (3) so as to be in the predetermined target range, and these actuations being operated as preparations for a collision;
a control means (27) for controlling an actuation of the seat actuating means (12),
wherein the control means (27) stops the actuation of the seat actuating means (12) when the seat and the seat back are not positioned within a predetermined target range at a predetermined time period before an anticipated collision time, the anticipated collision time being calculated on a basis of output signal from the collision forecast means (16).

2. The occupant protection device for the vehicle according to Claim 1, wherein the control means (27) updates the anticipated collision time on a basis of a latest output signal from the collision forecast means (16) and stops the actuation of the seat actuating means (12) on a basis of the updated anticipated collision time.

3. An occupant protection device for a vehicle comprising:
a collision forecast means (16) for forecasting a collision;
a seat actuating means (12) for moving a seat (1) in a longitudinal direction of the vehicle so as to be in a predetermined target range and for tilting a seat back (3) so as to be in the predetermined target range, and these actuations being operated as preparations for a collision;
a belt actuating means (13) for enhancing a tension of a seat belt (19) as another preparation for the collision;
a control means (27) for controlling actuations of the seat actuating means (12) and the belt actuating means (13),
wherein the control means (27) stops the actuation of the seat actuating means (12) when the seat and the seat back are not positioned within a predetermined target range at a predetermined time period before an anticipated collision time before the belt actuating means (13) starts its actuation.

4. The occupant protection device for the vehicle according to Claims from 1 through 3, wherein the control means (27) stops the actuation of the seat actuating means (12) on an actual collision when the actual collision occurs before the actuation of the seat actuating means (12) is stopped.

5. The occupant protection device for the vehicle according to Claims from 1 through 4, wherein the predetermined target range is set at a range in which an upper portion of the seat back (3) is positioned forwards relative to a shoulder belt anchor (21).

6. The occupant protection device for the vehicle according to Claim 1, wherein the collision forecast means (16) is a millimeter wave radar or an image recognition device, which is used for detecting an existence of an obstacle around the vehicle.

7. The occupant protection device for the vehicle according to Claim 1, wherein the anticipated collision time is calculated on the basis of information such as a distance between the vehicle and an obstacle, and a relative speed, which are calculated on the basis of output signals from the collision forecast means (16).

## Patentansprüche

1. Insassenschutzeinrichtung für ein Fahrzeug, umfassend:
ein Kollisionsvorhersageorgan (16) zur Vorhersage einer Kollision;
ein Sitzstellorgan (12), um einen Sitz (1) in einer Längsrichtung des Fahrzeugs so zu bewegen, dass er sich innerhalb eines vorbestimmten Zielbereichs befindet, und um eine Sitzlehne (3) so zu neigen, dass sie sich innerhalb eines vorbestimmten Zielbereichs befindet, wobei diese Betätigungen in Vorbereitung auf eine Kollision erfolgen;
ein Steuerorgan (27), um die Betätigung des Sitzstellorgans (12) zu steuern,
worin das Steuerorgan (27) die Betätigung des Sitzstellorgans (12) anhält, wenn sich innerhalb eines vorbestimmten Zeitraumes vor einer erwarteten Kollisionszeit der Sitz und die Sitzlehne nicht innerhalb eines vorbestimmten Zielbereichs befinden, wobei die erwartete Kollisionszeit auf der Grundlage eines Ausgangssignals vom Kollisionsvorhersageorgan (16) berechnet wird.

2. Insassenschutzeinrichtung für ein Fahrzeug nach Anspruch 1, worin das Steuerorgan (27) die erwartete Kollisionszeit auf der Grundlage des jüngsten Ausgangssignals vom Kollisionsvorhersageorgan (16) aktualisiert und die Betätigung des Sitzstellorgans (12) auf der Grundlage der aktualisierten erwarteten Kollisionszeit anhält.

3. Insassenschutzeinrichtung für ein Fahrzeug, umfassend:
ein Kollisionsvorhersageorgan (16) zur Vorhersage einer Kollision;
ein Sitzstellorgan (12), um einen Sitz (1) in einer Längsrichtung des Fahrzeugs so zu bewegen, dass er sich innerhalb eines vorbestimmten Zielbereichs befindet, und um eine Sitzlehne (3) so zu neigen, dass sie sich innerhalb eines vorbestimmten Zielbereichs befindet, wobei diese Betätigungen in Vorbereitung auf eine Kollision erfolgen;
ein Gurtstellorgan (13), um als weitere Vorbereitung auf die Kollision die Spannung eines Sitzgurts (19) zu erhöhen;
ein Steuerorgan (27), um die Betätigung des Sitzstellorgans (12) und des Gurtstellorgans (13) zu steuern,
worin das Steuerorgan (27) die Betätigung des Sitzstellorgans (12) anhält, wenn sich innerhalb eines vorbestimmten Zeitraumes vor einer erwarteten Kollisionszeit der Sitz und die Sitzlehne nicht innerhalb eines vorbestimmten Zielbereichs befinden, ehe das Gurtstellorgan (13) tätig wird.

4. Insassenschutzeinrichtung für ein Fahrzeug nach Ansprüchen 1 bis 3, worin das Steuerorgan (27) die Betätigung des Sitzstellorgans (12) bei einer tatsächlichen Kollision anhält, wenn die tatsächliche Kollision passiert, ehe die Betätigung des Sitzstellorgans (12) angehalten wird.

5. Insassenschutzeinrichtung für ein Fahrzeug nach Ansprüchen 1 bis 4, worin der vorbestimmte Zielbereich auf einen Bereich festgelegt ist, in dem sich ein oberer Abschnitt der Rückenlehne (3) weiter vom als eine Schultergurtverankerung (21) befindet.

6. Insassenschutzeinrichtung für ein Fahrzeug nach Anspruch 1, worin das Kollisionsvorhersageorgan (16) eine Millimeterwellenradar- oder Bilderkennungsvorrichtung ist, die zur Erkennung des Vorhandenseins eines Hindernisses im Umkreis des Fahrzeugs verwendet wird.

7. Insassenschutzeinrichtung für ein Fahrzeug nach Anspruch 1, worin die erwartete Kollisionszeit auf der Grundlage von Informationen wie dem Abstand des Fahrzeugs vom Hindernis und der relativen Geschwindigkeit berechnet wird, die auf der Grundlage von Ausgangssignalen des Kollisionsvorhersageorgans (16) berechnet werden.

## Revendications

1. Dispositif de protection d'occupant pour véhicule comprenant :
un moyen de prévision de collision (16) destiné à prévoir une collision,
un moyen d'actionnement de siège (12) destiné à déplacer un siège (1) dans une direction longitudinale du véhicule de manière à être dans une plage cible prédéterminée et destiné à incliner un dossier de siège (3) de manière à être dans la plage cible prédéterminée, et ces actionnements étant effectués en tant que préparations à une collision,
un moyen de commande (27) destiné à commander un actionnement du moyen d'actionnement de siège (12),
où le moyen de commande (27) arrête l'actionnement du moyen d'actionnement de siège (12) lorsque le siège et le dossier du siège ne sont pas positionnés dans une plage cible prédéterminée à un intervalle de temps prédéterminé avant un instant de collision anticipé, l'instant de collision anticipé étant calculé sur la base d'un signal de sortie provenant du moyen de prévision de collision (16).

2. Dispositif de protection d'occupant pour véhicule conforme à la revendication 1, dans lequel le moyen de commande (27) met à jour l'instant de collision anticipé sur la base d'un dernier signal de sortie provenant du moyen de prévision de collision (16) et arrête l'actionnement du moyen d'actionnement du siège (12) sur la base de l'instant de collision anticipé mis à jour.

3. Dispositif de protection d'occupant pour véhicule comprenant:
un moyen de prévision de collision (16) destiné à prévoir une collision,
un moyen d'actionnement de siège (12) destiné à déplacer un siège (1) dans une direction longitudinale du véhicule de manière à être dans une plage cible prédéterminée et destiné à incliner un dossier de siège (3) de manière à être dans la plage cible prédéterminée, et ces actionnements étant réalisés en tant que préparations à une collision,
un moyen d'actionnement de ceinture (13) destiné à augmenter la tension d'une ceinture de sécurité (19) en tant qu'autre préparation à la collision,
un moyen de commande (27) destiné à commander les actionnements du moyen d'actionnement de siège (12) et du moyen d'actionnement de ceinture (13),
où le moyen de commande (27) arrête l'actionnement du moyen d'actionnement de siège (12) lorsque le siège et le dossier du siège ne sont pas positionnés dans une plage cible prédéterminée à un intervalle de temps prédéterminé avant un instant de collision anticipé avant que le moyen d'actionnement de ceinture (13) ne commence son actionnement.

4. Dispositif de protection d'occupant pour véhicule conforme aux revendications 1 à 3, dans lequel le moyen de commande (27) arrête l'actionnement du moyen d'actionnement de siège (12) lors d'une collision réelle lorsque la collision réelle se produit avant que l'actionnement du moyen d'actionnement de siège (12) ne soit arrêté.

5. Dispositif de protection d'occupant pour véhicule conforme aux revendications 1 à 4, dans lequel la plage cible prédéterminée est établie à une plage dans laquelle une partie supérieure du dossier du siège (3) est positionnée vers l'avant par rapport à un point d'ancrage de ceinture épaulière (21).

6. Dispositif de protection d'occupant pour véhicule conforme à la revendication 1, dans lequel le moyen de prévision de collision (16) est un radar en ondes millimétriques ou un dispositif de reconnaissance d'image, qui est utilisé pour la détection de l'existence d'un obstacle autour du véhicule.

7. Dispositif de protection d'occupant pour véhicule conforme à la revendication 1, dans lequel l'instant de collision anticipé est calculé sur la base des informations telles que la distance entre le véhicule et un obstacle et une vitesse relative, qui sont calculées sur la base des signaux de sortie provenant du moyen de prévision de collision (16).
